# EUROPEAN PATENT SPECIFICATION

(11) **EP 4 590 955 B1**
(45) Date of publication and mention of the grant of the patent: **09.12.2026**
(21) Application number: 23768660.5
(22) Date of filing: 07.09.2023
(51) Int. Cl.: F03D 3/06, F03D 3/00

(54) **VERTICAL-AXIS WIND TURBINE**
WINDTURBINE MIT VERTIKALER ACHSE
ÉOLIENNE À AXE VERTICAL

(30) Priority: 23.09.2022 IT 202200019614
(43) Date of publication of application: 30.07.2025
(73) Proprietor: Gevi S.r.l., 56025 Pontedera (Pisa) (IT)
(72) Inventor: LUZZATI, Emanuele, 56127 PISA (IT); ESSAKHI, Soufiane, 51010 MASSA E COZZILE (Pistoia) (IT); SIMONELLI, Edoardo, 54033 MARINA DI CARRARA (Massa Carrara) (IT)
(74) Representative: Vanzini, Christian
(86) International application number: PCT/IB2023/058839
(87) International publication number: WO 2024/062320

(56) References cited:
- DE-U1- 202012 102 147
- US-A1- 2010 086 406
- US-A1- 2015 192 105
- US-B2- 10 054 107

## Description

The present invention relates in general to vertical-axis wind turbines of the shaftless type.

Vertical-axis wind turbines (or also VAWTs) have the potential to solve the major problems that limit the widespread use of classical, horizontal-axis wind turbines. In fact, to date, it is very difficult to install new horizontal-axis installations either onshore or offshore. In the first case, the problem lies in the fact that windy areas, where it is also economically viable to install wind turbines, are nearly saturated or difficult to reach. In the second case, for offshore installations, the main problem is instead high costs, with an uncompetitive LCOE compared to other renewables. In fact, to install offshore wind power with conventional foundations, a shallow sea is required where it is possible to anchor the turbines to the seabed using steel or concrete foundations. An alternative, which is becoming increasingly popular in the wind industry, are turbines with floating foundations. These horizontal-axis turbines-with the three rotor blades connected to the generator nacelle located at the top of the tubular tower, which is a little taller than the length of a blade-are supported by a steel float that is the main cost component of this type of installation.

Vertical-axis turbines, on the other hand, have inherent advantages related to the fact that the axis of rotation is vertical.

The first result is that the generator may be placed lower, also lowering the center of mass of the turbine. In addition, there is no need for a yaw control and movement system, since VAWTs may receive wind from all directions. Finally, because the angular momentum vector is vertical and coincident with the axis of rotation, gyroscopic stabilization of the wind turbine is achieved, thus reducing the angular tilt requirements compared to HAWTs.

These features make VAWTs potentially the ideal solution both in the floating offshore field-where the low center of mass considerably reduces foundation costs and, at the same time, makes keeping the turbine perfectly vertical less important-and in the onshore field, where traditional HAWTs are not used (e.g., an urban environment with very turbulent and discontinuous wind).

However, to date, classic VAWTs have received little interest from the industry because they are less efficient, difficult to start, and heavier than HAWTs of the same size. Moreover, they generally have structural fatigue problems related to cyclic loads on the vertical vanes and to periodic stalling, which then also limits their performance.

In order to make VAWTs industrially competitive, efforts have been made both in the direction of increasing their efficiency-trying to reduce the periodic stalling of the substantially vertical bearing surfaces-and in the direction of reducing masses, and thus trying to make a vertical-axis turbine without a central shaft.

An example of such a turbine is described in US 10054107 B2. This turbine has a cage structure without a central shaft extending between the axially opposite ends of the cage structure. This known solution proposes the use of an interpenetrating prism to replace the central shaft and restore the necessary rigidity to the structure. The upper three horizontal airfoils of the structure are rotated azimuthally by 30° relative to the lower horizontal airfoils to mitigate shear and torsional stresses resulting from the absence of the shaft. This increases the geometric complexity (and cost) of vertical airfoils, but does not solve the problem of structural fatigue or periodic airfoil stalling that typically plagues wind turbines of this type.

EP 1888917 B1 is another example of a VAWT where, in one of the proposed configurations, there are two pairs of arms respectively tilted and the absence of a central shaft. An aerodynamic rotor brake through the upper horizontal airfoils is then described. Thus, the performance or structural fatigue problem of VAWTs is neither solved nor addressed.

An object of the present invention is to provide a shaftless vertical-axis wind turbine solution that may at least partially overcome the drawbacks of the known art.

The invention therefore pertains to a shaftless vertical-axis wind turbine, according to claim 1, comprising a hub and a plurality of C-shaped blades, said blades being at one end connected to the hub, and being at the other end connected to each other by a connecting element,
wherein each blade comprises:
   - a lower radial portion having a radially inner end connected to the hub,
   - an upper radial portion having a radially inner end connected to the connecting element, and
   - a vertical portion having opposite ends connected to a radially outer end of the lower radial portion and a radially outer end of the upper radial portion, respectively, wherein each blade comprises an inner frame comprising a vertical frame portion and:
   - a lower radial airfoil arranged at the lower radial portion of the blade,
   - a single vertical airfoil arranged at the vertical portion of the blade, and
   - an upper radial airfoil arranged at the upper radial portion of the blade,
wherein the vertical airfoil of each blade is rotatable in its entirety about a respective axis of rotation defined by the respective vertical frame portion, in a manner that is independent from the homologous vertical airfoils of the other blades, to adjust the aerodynamic angle of attack of the relevant vertical airfoil.

In this description, "in a manner that is independent" means that the rotatable/adjustable airfoils (or rotatable/adjustable portions of airfoils) of the blades are not connected to a single source of motion (actuator or set of actuators). In other words, the airfoils that may be rotated/adjusted in a manner that is independent from each other are each driven by a relevant source of motion, without a force-transmission connection between airfoils of different blades or between a single source of motion and airfoils of different blades.

Thus, action is taken on two mutually related fronts. Masses are redistributed more efficiently and reduced by removing the central shaft generally found on VAWTs, and at the same time, vertical airfoils are used that may be rotated independently relative to their relevant axis of rotation. The aerodynamic airfoils and the associated control system-in addition to eliminating periodic stall and increasing efficiency to near the Betz limit (as amply demonstrated in the scientific literature) -reduce wind loads on the structure to less than half, also making it possible to remove the center shaft. At the same time, removing the shaft not only substantially reduces the total mass of the turbine; in effect, there is also an aerodynamic advantage because the shaft-induced low-frequency oscillatory flow perturbations (i.e., vortex shedding), that would make power extraction downstream of the shaft extremely inefficient, are no longer present. In effect, the swirling, oscillating wake produced by the shaft often causes the second part of the vane rotation to produce a negligible amount of energy, especially for high-solidity turbines.

This has advantages for both the overall mass of the structure and the efficiency and interaction of the blades with the fluid:
- From a structural point of view, the primary task of the shaft is to unload bending loads acting on the structure to the base. These loads, reduced by means of the control, make the removal of the shaft sustainable.
- There may be stiffening elements working in traction or substantially in traction, e.g., cables or tie rods, which will have reduced cross sections that introduce a level of turbulence comparable to that inherent in asymptotic flow.

Thus structurally a more efficient use of the available mass is obtained, with a reduction in the total mass. On the other hand, from the fluid dynamic point of view:
- The vortex shedding perturbation downstream of the central axis is eliminated (the wake generated by the shaft is removed), this increases the energy extracted from the turbine and decreases the oscillations (0 - 2 Hz) (vortices generated when a flow hits a cylindrical structure).
- The reduction of the oscillations decreases turbine noise.
- The continuity of the airfoils at both ends results in reduced losses due to induced resistance.

Further features and advantages of the wind turbine according to the invention will become clearer from the following detailed description of an embodiment of the invention, made in reference to the accompanying drawings, provided purely for illustrative and non-limiting purposes, wherein:
Fig. 1 is a perspective view of a vertical-axis wind turbine according to the invention;
Fig. 2 is a tangential cross-sectional view taken along a vertical portion of a blade of the wind turbine in Fig. 1,
Fig. 3 is an elevation view of the vertical portion of the blade in Fig. 2;
Fig. 4 through 6 are a perspective view, a longitudinal sectional view, and a plan view of a hub of the wind turbine in Fig. 1, respectively;
Fig. 7 is a plan view of an upper corner portion of a blade of the wind turbine;
Fig. 8 and 9 are cross-sectional views of an upper connecting element of the blades of the wind turbine in Fig. 1;
Fig. 10 and 11 are a simplified perspective view and a simplified plan view, respectively, of the wind turbine in Fig. 1, equipped with stiffening tie rods;
Fig. 12 is a perspective view of another vertical-axis wind turbine;
Fig. 13 is a cross-sectional view showing an airfoil of the wind turbine in Fig. 12;
Fig. 14 is a perspective view showing a detail of the wind turbine in Fig. 12;
Fig. 15 is a plan view showing an additional vertical-axis wind turbine;
Fig. 16 is a perspective view of another vertical-axis wind turbine; and
Fig. 17 is a side elevation view of a detail of the wind turbine in Fig. 16.

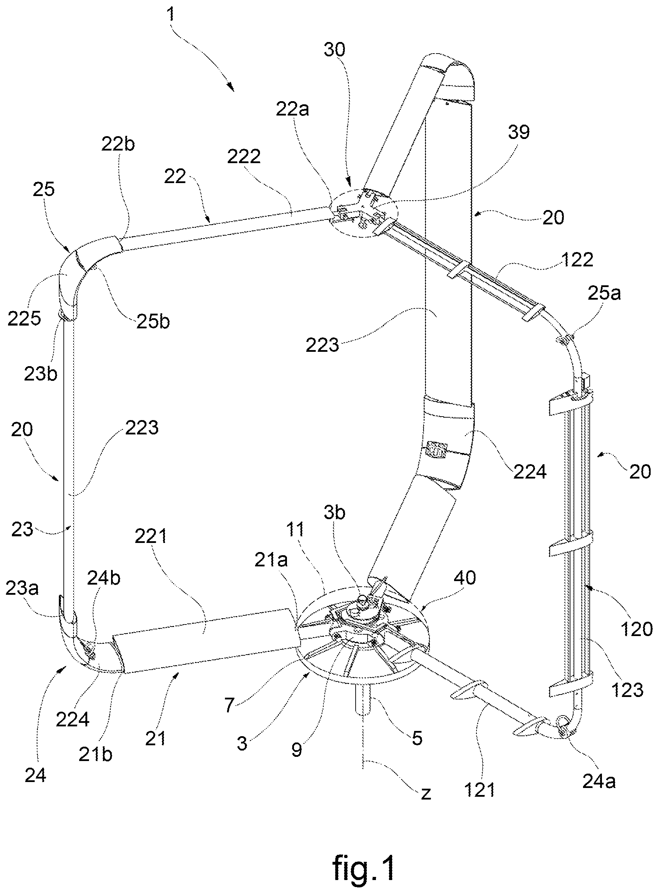

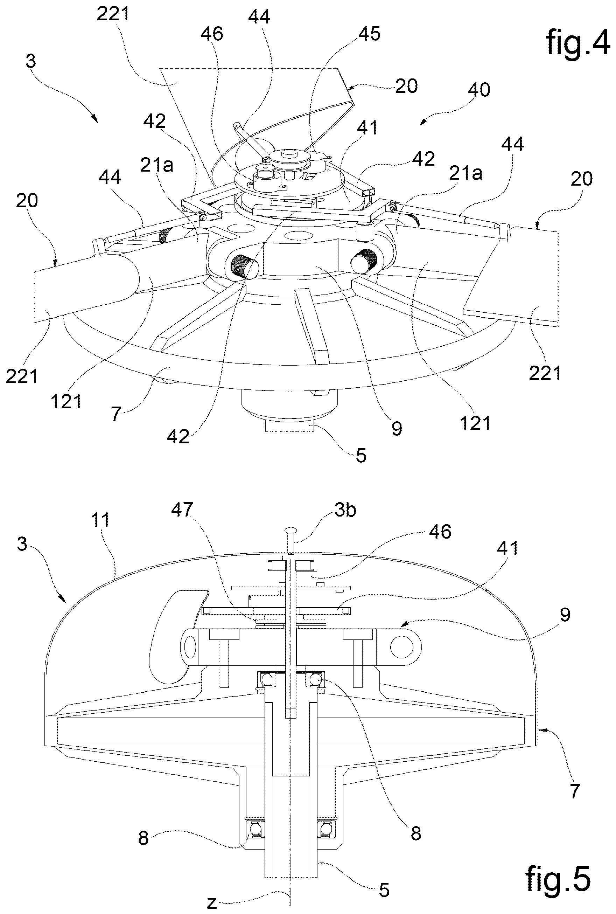

With reference to Fig. 1-11, a vertical-axis wind turbine is illustrated, denoted as a whole as 1. The wind turbine 1 comprises a hub 3 mounted on a shaft 5 so that it may rotate, relative to the shaft 5, about a vertical axis z. The wind turbine further comprises an axial-flow generator 7 configured to convert the mechanical energy of the rotating wind turbine into electrical energy. The axial-flow generator 7 comprises a rotor with permanent magnets, integral with the hub 3 of the wind turbine, and a stator equipped with windings (not shown) and integral with the shaft 5 and integral with the ground. Between the rotor and the stator/shaft are interposed oblique ball bearings 8 (see Fig. 5). The use of the axial-flow generator may be advantageous for reasons of compactness; however, the invention is not limited thereto, and thus the wind turbine may be equipped with other systems for converting mechanical energy into electricity.

The hub 3 of the wind turbine further comprises a lower connecting plate 9, through which the blades 20 of the wind turbine are connected to the hub 3. The hub 3 further comprises an outer cover 11 (shown with a dotted line in Fig. 1) attached to the rotor of the generator 7 to enclose the lower connection plate 9 and other components that will be described hereinafter.

The wind turbine 1 further comprises a plurality of C-shaped blades 20 (in the example shown, three blades). The blades 20 are at one end connected to the hub 3, and at the other end are connected to each other by an upper central connecting element 30. The blades 30 together form a cage structure without a central shaft connecting the hub 3 to the connecting element 30. In this sense, the wind turbine 1 is referred to as a "shaftless" type. The centerline of each blade 20 lies on a radial plane. The blades 20 are equispaced azimuthally with respect to the axis z of the wind turbine.

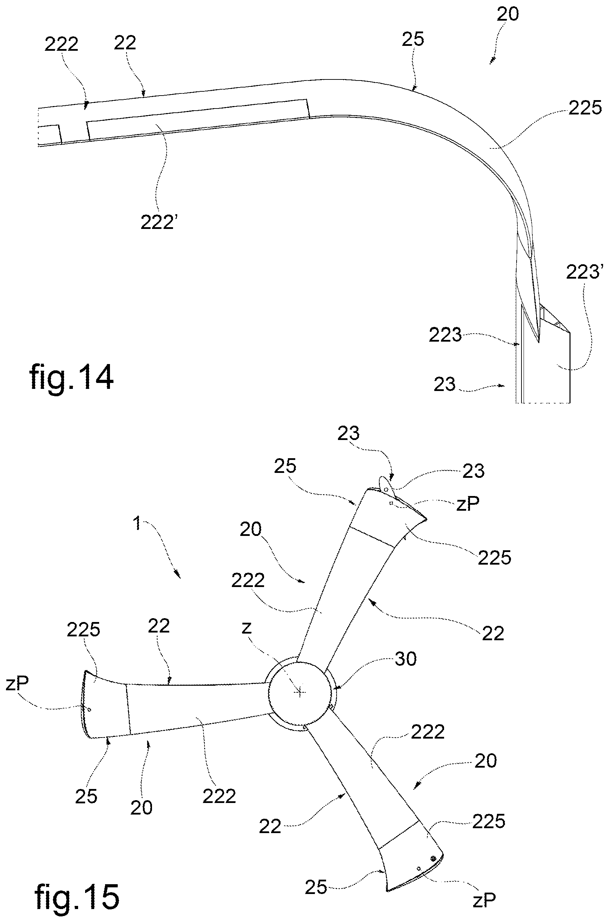

Each of the blades 20 therefore has a lower radial portion 21 having a radially inner end 21a connected to the hub 3, an upper radial portion 22 having a radially inner end 22a connected to the connecting element 30, and a vertical portion 23 having opposite ends 23a, 23b connected to a radially outer end 21b of the lower radial portion 21 and a radially outer end 22b of the upper radial portion 22, respectively. The radial portions 21, 22 extend along a substantially radial direction with respect to the axis z, or more generally along a direction comprising a radial component (e.g., the direction of extension of the radial portions 21, 22 may also comprise an azimuthal component; see Fig. 15 for reference). In particular, the radial portions 21, 22 extend along a horizontal radial direction. The vertical portion 23 extends along a substantially vertical direction, or more generally along a direction comprising a vertical component. Preferably, the vertical portion 23 extends along a precisely vertical direction.

Preferably, each of the radial portions 21, 22 and the vertical portion 23 of each blade 20 are linear. Radial portions 21, 22 are connected to the vertical portion through respective corner portions 24, 25.

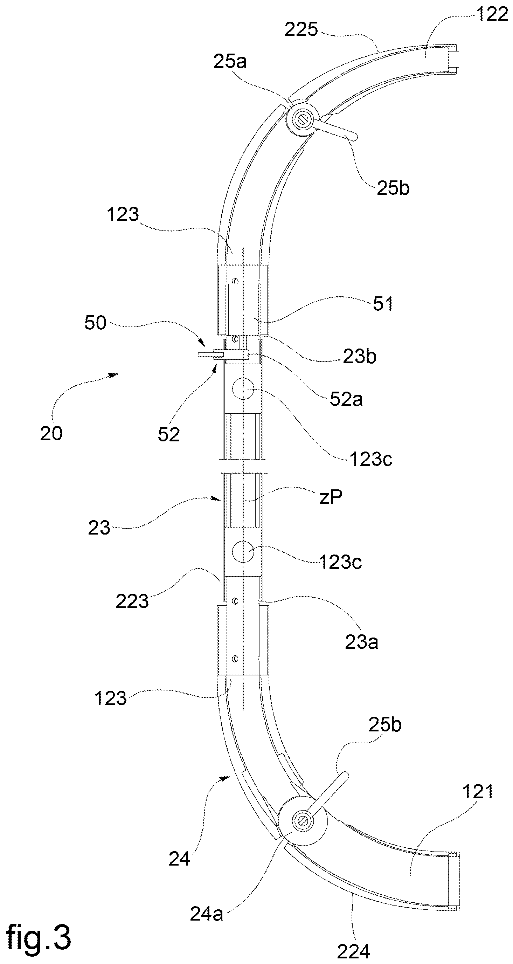

From the point of view of its structure, each blade 20 comprises an inner frame 120 that extends along the full extension of the blade 20, and therefore along the lower radial portion 21, the vertical portion 23, and the upper radial portion 22 of the blade 20. In particular, the inner frame 120 comprises a portion of the lower radial frame 121, a portion of the vertical frame 123, and a portion of the upper radial frame 122. The lower radial frame portion 121 extends from the radially inner end 21a of the lower radial portion 21 of the blade to the lower corner portion 24 of the blade. At the radially inner end 21a of the lower radial portion 21 of the blade, the lower radial frame portion 121 is hinged to the lower connecting plate 9 arranged inside the hub 3. In particular, it is hinged according to a horizontal hinge axis, oriented in the tangential direction. At the lower corner portion 24 of the blade, the lower radial frame portion 121 is hinged to the vertical frame portion 123 (note that the hinge 24a between the lower radial frame portion 121 and the vertical frame portion 123 is configured such that the rotation-toward the inside of the turbine-of the vertical frame portion 123 with respect to the lower radial frame portion 121 is prevented, or at most allowed for a very small angular range-see Fig. 3). The vertical frame portion 123 extends from the lower corner portion 24 to the upper corner portion 25 of the blade. At the upper corner portion 25, the vertical frame portion 123 is hinged to the upper radial frame portion 122 (note that the hinge 25a between the upper radial frame portion 122 and the vertical frame portion 123 is configured so that the rotation-toward the inside of the turbine-of the vertical frame portion 123 with respect to the upper radial frame portion 122 is prevented, or at most allowed for a very small angular range-see Fig. 3). The upper radial frame portion 122 extends from the upper corner portion 25 to the radially inner end 22a of the upper radial portion 22 of the blade. At the radially inner end 22a of the upper radial portion 22 of the blade, the upper radial frame portion 122 is hinged to an upper connecting plate 39 arranged within the connecting element 30. In particular, it is hinged according to a horizontal hinge axis, oriented in the tangential direction. An outer cover 39a is fixed to the upper connecting plate 39 to enclose control components that will be described hereinafter.

Each blade 20 of the wind turbine further comprises a plurality of airfoils arranged on the inner frame 120. In particular, it comprises a lower radial airfoil 221 arranged at the lower radial portion 21 of the blade, a vertical airfoil 223 arranged at the vertical portion 23 of the blade, and an upper radial airfoil 222 arranged at the upper radial portion 22 of the blade. Additional airfoils 224, 225 are arranged at the corner portions 24, 25 of the blade.

The airfoils of one of the blades 20 have been removed in Fig. 1.

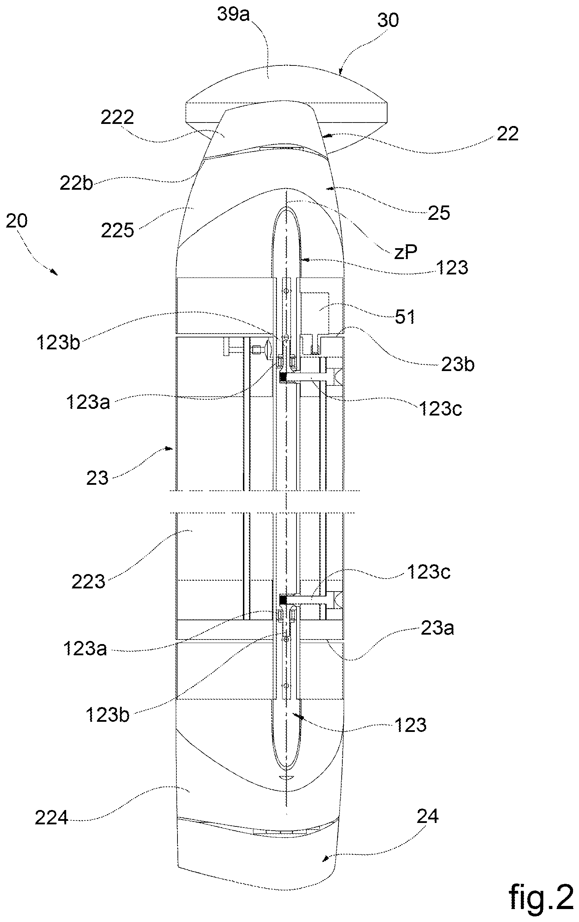

The lower radial airfoil 221 is rotatable about an axis of rotation that extends in the longitudinal direction of the lower radial airfoil, and thus in the radial direction. This axis of rotation in the example shown is defined by the lower radial frame portion 121. The vertical airfoil 223 is rotatable about a rotation axis zP that extends in the longitudinal direction of the vertical airfoil 223, and thus in the vertical direction (as shown in Fig. 2, 3 and 7). This axis of rotation in the example shown is defined by the vertical frame portion 123. With reference to Fig. 2, it may be seen that in the example shown, the central part of the vertical frame portion 123 is tubular, and bearings 123a are arranged therein that support respective rotation pins 123b, which are rigidly connected to the vertical airfoil 223 through connecting members 123c. The connecting members 123c are arranged through respective slots which are cut in the wall of the tubular vertical frame portion 123. This method of coupling between the frame portion and the airfoil is only one example and is not essential to the invention.

The upper radial airfoil 222 is rotatable about an axis of rotation that extends in the longitudinal direction of the upper radial airfoil 222, and thus in the radial direction. This axis of rotation in the example shown is defined by the upper radial frame portion 122. The airfoils 224, 225 arranged at the corner portions 24, 25 of the blade are fixed.

Control mechanisms are provided for on board the wind turbine 1 to move the movable airfoils, and thus adjust their trim according to the operating conditions.

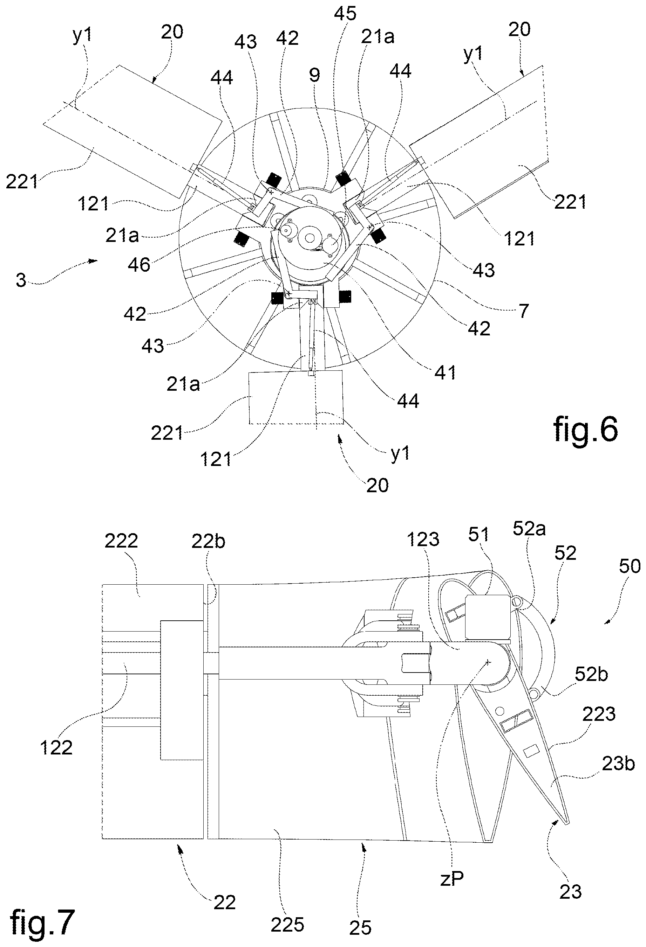

A first control mechanism 40, shown in Fig. 4 through 6, is associated with the lower radial airfoils 221 of the blades, and is operable to adjust the aerodynamic angle of attack of these airfoils for stabilizing the bending moment at the bearings or connecting joints between airfoils. By adjusting the aerodynamic angle of attack of the lower radial airfoils, it is possible to induce aerodynamic loads adapted to cancel the moment of resistance created by the wind on the structure. In the example shown, the first control mechanism 40 comprises an eccentric plate 41 integral in rotation with the lower connecting plate 9. On the eccentric plate 41 are hinged at one end, about respective vertical hinging axes, a plurality of L-shaped control arms 42, one for each lower radial airfoil 221. Each of the control arms 42 is also hinged to the lower connecting plate 9, about a relevant vertical axis arranged in 43 (see Fig. 6). The opposite end of each control arm 42 is articulated, via a connecting rod 44, to the relevant lower radial airfoil 221. The connecting rod 44 is connected to the relevant lower radial airfoil 221 eccentrically relative to the adjustment axis y1 of the lower radial airfoil 221. In this way, a rotation of the eccentric plate 41 about the vertical axis z, relative to the connecting plate 9, results in a rotation of the lower radial airfoils 221 about their respective adjustment axes y1, relative to their respective lower radial frame portions 121. In the example shown, a servomotor 45, configured to drive the eccentric plate 41 in rotation relative to the connecting plate 9, is arranged inside the hub 3. The eccentric plate 41 is also adjustable in eccentricity with respect to the vertical axis z. For this purpose, the eccentric plate 41 is translatably arranged along guides relative to the connecting plate 9, and a second servomotor 46 is arranged inside the hub 3 to actuate the eccentric plate 41 in translation relative to the connecting plate 9. Through the two servomotors 45, 46, the eccentricity and position of the eccentric plate may then be set to adjust the amplitude and phase of the sine wave describing the individual lower radial airfoils according to the speed and direction of the wind.

To power and control the servomotors 45, 46 (as well as all other electrical or electronic devices on board the wind turbine), induction coils 47, through which electrical energy is transported from the outside into the rotating part, are arranged inside the hub 3. Alternatively, brushing contacts may also be used. The hub 3 also contains the microprocessors and electronics required to control the trim of the moving surfaces (not shown). According to an alternative embodiment, the trim adjustment of the lower radial airfoils 221 may be manual; in this case, the servomotors 45 and 46, as well as the associated control and power equipment, would be absent.

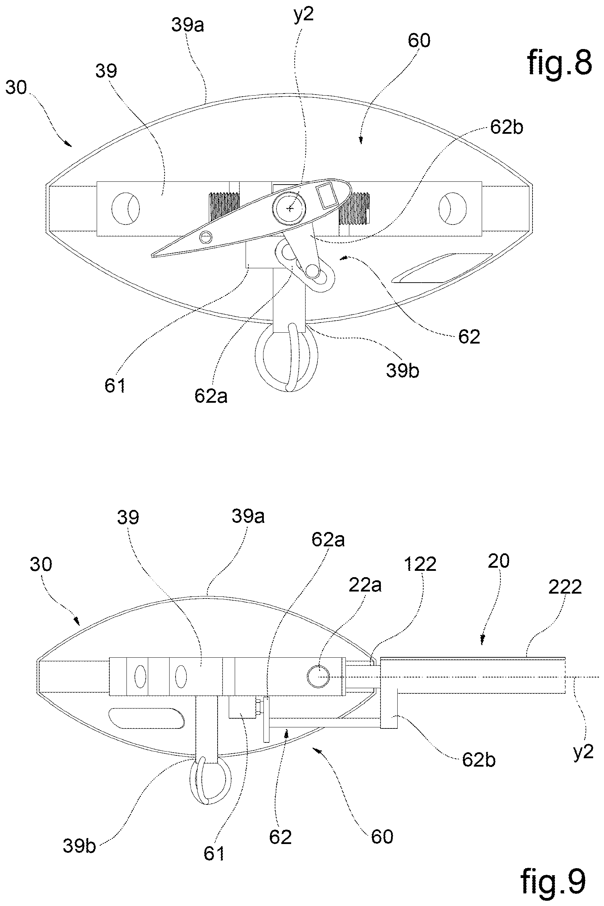

A second control mechanism 50, shown in Fig. 3 and 7, is associated with each of the vertical airfoils 223 of the blades, and is operable to rotate each vertical airfoil 223 (aerodynamic angle-of-attack adjustment) in a manner that is independent from each other with the aim of maximizing power extraction and minimizing fatigue loads. In the example shown, the second control mechanism 50 comprises a stepper motor 51 arranged integral with the vertical frame portion 123, and a connecting rod-crank linkage 52 having one end 52a integral with the output shaft of the stepper motor 51, and an opposite end 52b hinged to the vertical airfoil 223. The adjustment axis is denoted by y2 in Fig. 8 and 9.

A third control mechanism 60, shown in Fig. 8 and 9, is associated with each of the upper radial airfoils 222 of the blades and, similar to the first control mechanism 40, is operable to adjust the aerodynamic angle of attack of these airfoils for stabilizing the bending moment at the bearings and connecting joints. Also by adjusting the aerodynamic angle of attack of the upper radial airfoils, it is thus possible to induce aerodynamic loads adapted to significantly reduce the moment of resistance created by the wind on the structure. **In** the illustrated example, the third control mechanism 60 is arranged within the upper connecting element 30 and comprises-for each of the upper radial airfoils 222-a relevant servomotor 61, integral with the upper connecting plate 39, and a relevant slot-crank assembly 62 having an end 62a integral with the output shaft of the servomotor 61, and an opposite end 62b integral with the upper radial airfoil 222.

The two types of trim control of the upper and lower radial airfoils-i.e., fully electronic control with actuators and mechanical control with two actuators that adjust phase and amplitude-may be combined as desired. For example, according to an embodiment not shown, the upper radial airfoils are rotatable in a manner that is independent from each other, and the lower radial airfoils are also rotatable independent from each other. In another embodiment not shown, the upper radial airfoils are controlled in rotation by the same pair of actuators, and the lower radial airfoils are controlled in rotation by another pair of actuators.

The stepper motors previously described are only examples; in general any type of actuator may be used.

The wind turbine 1 described above has an internal structure provided by a union of several hinged parts, and therefore labile; this allows shear, bending, and torsional stresses in the frame to be minimized, making it work in compression as much as possible. This arrangement increases the operational life of the wind turbine.

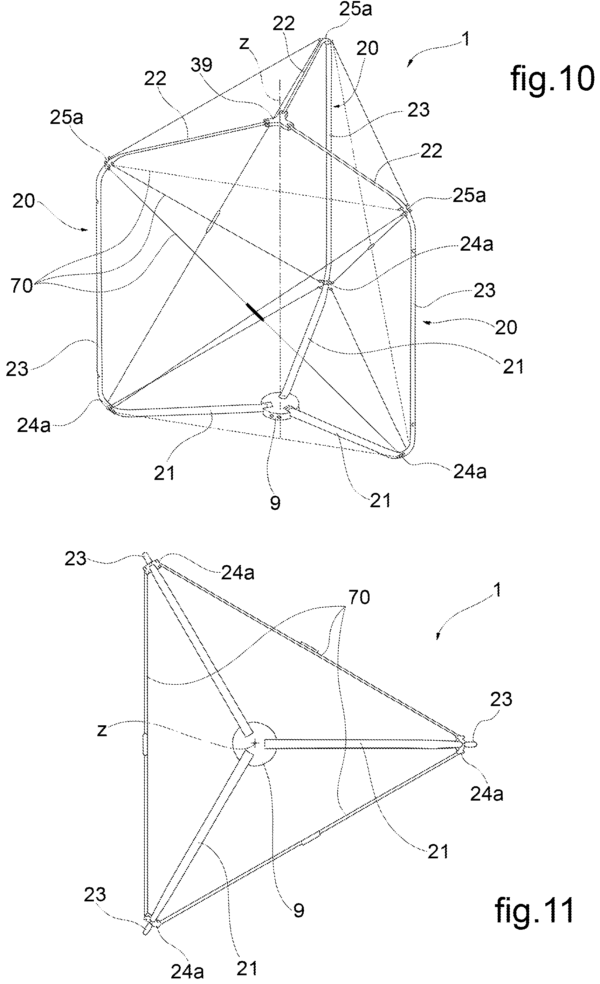

Each blade 20 has hinges at the connection points with the hub 3 (more precisely, with the lower connecting plate 9) and with the connecting element 30 (more precisely, with the upper connecting plate 39) and at the corner portions 24, 25. This creates a truss equivalent to an articulated quadrilateral with a carriage at the upper end of the blade. Thus, a total of 6 degrees of freedom are counted, 2 for each arm. However, this structural lability is compensated for by the addition of traction members 70, in particular cables/tie rods, that connect hinges placed at the corners or in the center obliquely (see Fig. 10 and 11). The various figures show pins for the attachment of these cables or tie rods, specifically a pin 39b associated with the upper connecting plate 39, pins 24b and 25b associated with hinges 24a and 25a, respectively, and a pin 3b associated with the hub 3. Alternatively, the actual hinge may be replaced with a hinge composed of a cylindrical cross-section with lower flexural stiffness that will behave as a plastic hinge that has reached yield strength, which transmits bending loads between the two parts and makes the use of cables or tie rods less necessary.

The wind turbine 1 may also have wind direction and speed or pressure sensors (e.g., Pitot, hot wire, cup anemometers, ultrasonic anemometers, LIDAR, weather vanes, temperature and humidity sensors, etc.) on the rotating blades and also in the rest of the turbine that allow for the collection of wind or pressure distribution data.

Accelerometers may also be present to estimate wind force and dynamic loads on the structure in order to aid in wind prediction and the active control of dynamic loads.

Finally, product wear may be monitored using the accelerometers, thus enabling predictive maintenance to be implemented. Temperature and humidity sensors may also be used to monitor the condition of materials, along with capacitive or conductivity sensors to estimate corrosion and strain gauges for thermal deformation and expansion.

Each controlled airfoil may have position sensors (e.g., encoder, reed, etc.) to measure its relative or absolute angular position, and there may be at least one position sensor on the generator shaft.

Each controlled airfoil may also have speed sensors (e.g., tachometer dynamo or differential speed sensor) to measure its angular speed, and there may be at least one speed sensor on the generator shaft.

There may be a control system that, based on the sensor information, independently controls the moving surfaces. If necessary, the turbine may receive data from the outside (other turbines, power grid), store it, process it, and use it for the control system of the moving surfaces and in turn send it for statistical and monitoring purposes. A communication system with the Internet or satellite network may thus be included in the electronics.

There may be a control over the rotational speed of the entire turbine, for example, through the power generator.

There may be an emergency braking system that stops the rotation of the turbine by means of a mechanical emergency brake.

Strain gauges may also be present to detect any blade deformation.

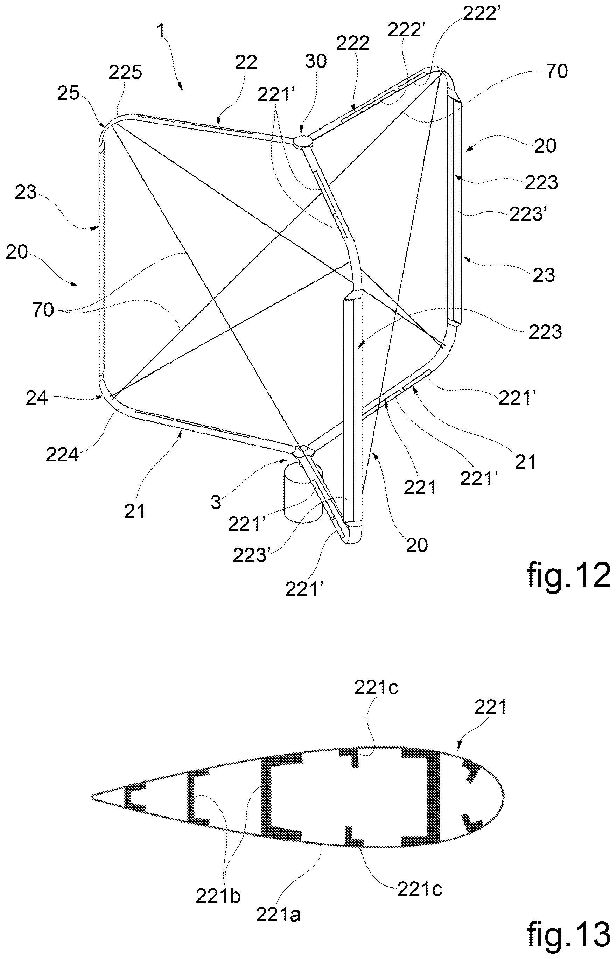

With reference to Fig. 12-14, a second vertical-axis wind turbine is illustrated, which differs from the previous one in that it has a monocoque structure and has no hinges in the corner sections nor in the connecting joint between the radial airfoils and the connecting elements. Elements corresponding to those of the preceding embodiment have been assigned the same reference signs; these elements will not be described again.

By way of example, a cross-section of one of the lower radial airfoils 221 is shown in Fig. 13, the construction of which reflects the structure of a typical semi-monocoque airfoil (note that this cross-section was taken at a cross-section of the airfoil with no moving parts). The lower radial airfoil 221 therefore comprises a working skin 221a, stringers 221b, and stiffening beams 221c joined to the skin 221 to relieve the loads on the center hub. Although not shown in the figures, it is understood that the upper radial airfoils 222 and vertical airfoils 223 have a similar structure.

The above in relation to the turbine in Fig. 1-11 also applies to the semi-monocoque turbine, except that there is no longer a frame and the adjustable airfoils are no longer rotatable in their entirety; only portions of these airfoils are rotatable. In particular, in the example shown, only half of the chord 223' of each of the vertical airfoils 223 is rotatable about a longitudinal axis of the relevant vertical airfoil 223, relative to the remaining part of the relevant vertical airfoil 223. In this way it is possible to adjust the aerodynamic angle of attack and the curvature of the vertical airfoils 223. Moreover, at the trailing edge of each radial airfoil 221 and 222, the radial airfoil 221, 222 has one or more portions 221', 222' rotatable about a longitudinal axis (or respective longitudinal axes) of the relevant radial airfoil 221, 222 (see Fig. 12 and 14). In this way it is possible to adjust the aerodynamic angle of attack and the curvature of the radial airfoils 221, 222 at the longitudinal sections of the radial airfoils 221, 222 in which the rotatable portions 221', 222' are arranged.

With reference to Fig. 15, an additional vertical-axis wind turbine is shown, having a structure obtained from a combination of a frame structure and a semi-monocoque structure. In particular, in the example shown, the radial airfoils 221, 222 have a monocoque structure as in the embodiment in Fig. 12 (but without adjustable parts, although in other embodiments there could be adjustable parts), and vertical airfoils 223 have a frame structure as in the embodiment in Fig. 1. Elements corresponding to those of the preceding embodiments have been assigned the same reference signs; these elements will not be described again. What was said above in relation to the turbine in Fig. 1-11 and the semi-monocoque turbine in Fig. 12-14 also applies to the turbine in Fig. 15.

It should also be noted that the radial portions 21, 22 of the blades 20 extend along a direction comprising a radial component and an azimuthal component with respect to the axis z. In this case, the axis line of the radial airfoils 221, 222 is not a straight line but a spiral section.

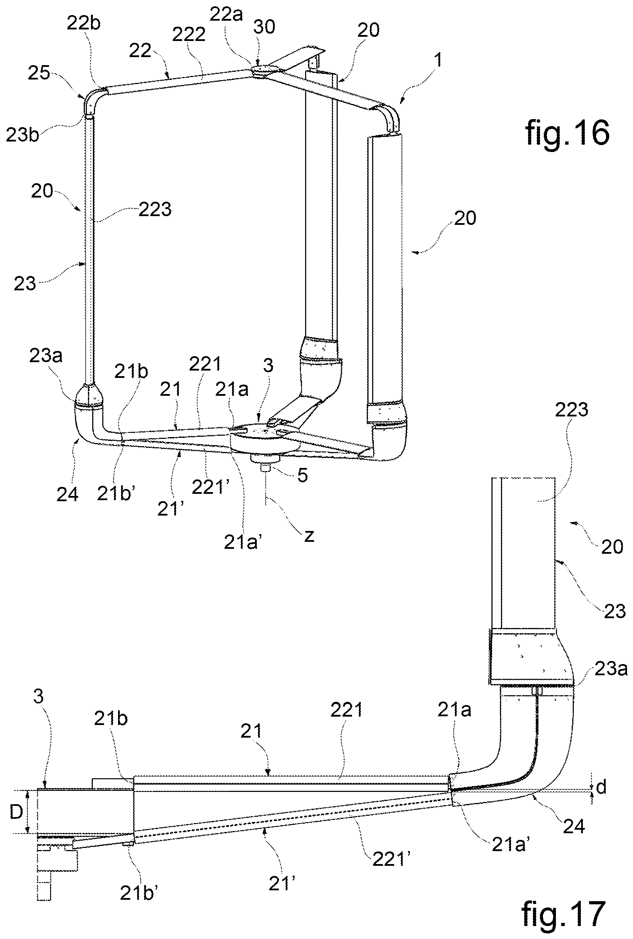

With reference to Fig. 16 and 17, an additional vertical-axis wind turbine is shown.

Elements corresponding to those of the embodiments described above have been assigned the same numerical references. These elements will not be further described.

Similar to the embodiments described above, the turbine of Fig. 16 and 17 comprises, for each blade 20, the lower radial portion 21 having a radially inner end 21a connected to the hub 3, the upper radial portion 22 having a radially inner end 22a connected to the connecting element 30, and the vertical portion 23 having opposite ends connected to a radially outer end 21b of the lower radial portion 21 and a radially outer end 22b of the upper radial portion 22, respectively. Each of the portions 21, 22, 23 is fitted with respective airfoils 221, 222, 123 and has a structure similar to those described above (frame, monocoque, or semi-monocoque), with the adjustment options described above.

Unlike the previous embodiments, the turbine in Fig. 16 and 17 further comprises, for each blade 20, a second lower radial portion 21' fitted with a relevant airfoil 221'. This second lower radial portion 21' has a radially inner end 21a' connected to the hub 3 and a radially outer end 21b' connected to the relevant vertical portion 23, possibly via the relevant lower corner portion 24, if present.

As may be seen in particular in Fig. 17, the second lower radial portion 21' is arranged at a different elevation from the (first) lower radial portion 21 and is angled with respect to the first lower radial portion 21 so as to form a triangular or quadrilateral structure that rigidly connects the hub 3 to the vertical portion 23, or to the lower corner portion 24, if present. In such a triangular or quadrilateral structure, the vertical distance d between the radially outer ends 21b, 21b' of the lower radial portions 21, 21' is less than the vertical distance D between the radially inner ends 21a, 21a' of the lower radial portions 21, 21'.

In the embodiment of Fig. 16 and 17, the airfoils 221 and 221' of the first lower radial portion 221 and the second lower radial portion 221' are fixed, that is, not adjustable.

The above solution mitigates the shear and bending stresses that, in general, would make the solution without a central shaft impractical. Thus, this is a mechanical solution that works in a similar way with respect to the embodiment that involves adjusting the lower radial airfoil, stabilizing the rotor and its rotational dynamics. Through this solution, when coupled with, for example, the traction members 70 described in relation to Fig. 10-12, there is a complete recovery of the flexural stiffness of the structure. The triangular or quadrilateral structure creates a truss with stiffness equivalent to the two lower radial airfoil sections, but with the appropriate spacing therebetween. Therefore, a structure is obtained that resists bending in the directions which are perpendicular to the axis of rotation z while also significantly increasing the rotor's eigenfrequencies in the modes excited thereby, but without affecting the aerodynamic performance of the rotor. Beyond the obvious aerodynamic advantages, such a solution also saves material compared with a single lower radial portion solution with equivalent flexural stiffness. Moreover, this solution has greater simplicity in implementation and control than a similar solution with cyclic movement of the lower radial airfoils.

According to a not shown alternative embodiment, the second lower radial portion 21' can be provided with a traction member (in particular, a cable or a tie rod) having a radially inner end connected to the hub 3 and a radially outer end connected to the relevant vertical portion 23, possibly via the relevant lower corner portion 24, if present.

## Claims

1. Shaftless vertical-axis wind turbine, comprising a hub (3) and a plurality of C-shaped blades (20), said blades being at one end (21a) connected to the hub (3), and being at the other end (22a) connected to each other by a connecting element (30),
wherein each blade (20) comprises:
- a lower radial portion (21) having a radially inner end (21a) connected to the hub (3),
- an upper radial portion (22) having a radially inner end (22a) connected to the connecting element (30), and
- a vertical portion (23) having opposite ends connected to a radially outer end (21b) of the lower radial portion (21) and a radially outer end (22b) of the upper radial portion (22), respectively,
wherein each blade (20) comprises an inner frame comprising a vertical frame portion (123) and
- a lower radial airfoil (221) arranged at the lower radial portion (21) of the blade,
- a single vertical airfoil (223) arranged at the vertical portion (23) of the blade, and
- an upper radial airfoil (222) arranged at the upper radial portion (22) of the blade,
wherein the vertical airfoil (223) of each blade (20) is rotatable in its entirety about a relevant axis of rotation defined by the respective vertical frame portion (123), in a manner that is independent from the homologous vertical airfoils (223) of the other blades (20), to adjust the angle of attack of the relevant vertical airfoil (223)

2. Wind turbine according to claim 1, wherein said lower radial portion (21) is a first lower radial portion (21), wherein each blade (20) further comprises a second lower radial portion (21') provided with a relevant airfoil (221') or with a traction member and having a radially inner end (21a') connected to the hub (3) and a radially outer end (21b') connected to the relevant vertical portion (23), the second lower radial portion (21') being arranged at a different elevation from the first lower radial portion (21) and being angled with respect to the first lower radial portion (21) so as to form a triangular or quadrilateral structure that rigidly connects the hub (3) to the relevant vertical portion (23), or to a lower corner portion (24) of the blade interposed between the lower radial portions (21, 21') and the relevant vertical portion (23), wherein the vertical distance (d) between the radially outer ends (21b, 21b') of the lower radial portions (21, 21') is less than the vertical distance (D) between the radially inner ends (21a, 21a') of the lower radial portions (21, 21').

3. Wind turbine according to claim 1 or 2, wherein at least one portion of at least one of said lower radial airfoil (221) and upper radial airfoil (222) of each blade (20) is rotatable about a relevant axis of rotation, optionally in a manner that is independent from the homologous portions of the lower radial airfoil (221) or of the upper radial airfoil (222) of the other blades (20), to adjust the angle of attack or the curvature of the relevant lower radial airfoil (221) or of the relevant upper radial airfoil (222).

4. Wind turbine according to any of the preceding claims, wherein the lower radial portion (21), the vertical portion (23) and the upper radial portion (22) of each blade are linear, wherein a lower corner portion (24) of the blade is interposed between the lower radial portion (21) and the vertical portion (23) of each blade, wherein an upper corner portion (25) of the blade is interposed between the upper radial portion (22) and the vertical portion (23) of each blade, said lower corner portion (24) and upper corner portion (25) being curved.

5. Wind turbine according to claim 4, wherein each blade further comprises a lower corner airfoil (224) and an upper corner airfoil (225) arranged at the lower corner portion (24) and at the upper corner portion (25) of the blade, respectively.

6. Wind turbine according to any of claims from 4 to 5, further comprising a plurality of traction members (70) stretched between relevant corner portions (24, 25) of different blades or between at least one of the corner portions (24, 25) of each blade and at least one of said hub (3) and connecting element (30) or between the hub (3) and the connecting element (30), to stiffen the wind turbine.

7. Wind turbine according to claim 4, wherein the radially outer ends of the lower radial portion (21) and of the upper radial portion (22) of each blade are connected to the relevant vertical portion (23) by respective hinges (24a, 25a) arranged at the relevant lower corner portion (24) and at the relevant upper corner portion (25), and wherein the radially inner ends of the lower radial portion (21) and of the upper radial portion (22) of each blade are hinged to the hub (3) and to the connecting element (30), respectively.

8. Wind turbine according to any of the preceding claims, further comprising a control mechanism (50) associated with each of the vertical airfoils (223) of the blades, and operable to adjust the angles of attack of the vertical airfoils (223) in a manner that is independent from each other, by rotation of said vertical airfoil (223) of each blade (20).

9. Wind turbine according to claim 3, optionally in combination with any of claims from 4 to 8, further comprising a control mechanism (60) associated with each of the upper radial airfoils (222) or lower radial airfoils (221) of the blades and arranged in the connecting element (30) or in the hub (3), said control mechanism (60) being operable to adjust the angles of attack or the curvatures of the upper radial airfoils (222) or of the lower radial airfoils (221) in a manner that is independent from each other, by rotation of said at least one portion of at least one of said lower radial airfoil (221) and upper radial airfoil (222) of each blade (20).

10. Wind turbine according to claim 3, optionally in combination with any of claims from 4 to 9, further comprising a control mechanism (40) associated with the lower radial airfoils (221) or upper radial airfoils (222) of the blades and arranged in the hub (3) or in the connecting element (30), said control mechanism (40) being operable to adjust in a simultaneous manner the angles of attack or the curvatures of the lower radial airfoils (221) or upper radial airfoils (222), by rotation of said at least one portion of at least one of said lower radial airfoil (221) and upper radial airfoil (222) of each blade (20).

## Patentansprüche

1. Wellenlose Windturbine mit vertikaler Achse, umfassend eine Nabe (3) und eine Vielzahl von C-förmigen Schaufeln (20), wobei die Schaufeln an einem Ende (21a) mit der Nabe (3) verbunden sind und am anderen Ende (22a) durch ein Verbindungselement (30) miteinander verbunden sind,
wobei jede Schaufel (20) umfasst:
- einen unteren radialen Abschnitt (21) mit einem radial inneren Ende (21a), das mit der Nabe (3) verbunden ist,
- einen oberen radialen Abschnitt (22) mit einem radial inneren Ende (22a), das mit dem Verbindungselement (30) verbunden ist, und
- einen vertikalen Abschnitt (23) mit gegenüberliegenden Enden, die jeweils mit einem radial äußeren Ende (21b) des unteren radialen Abschnitts (21) und einem radial äußeren Ende (22b) des oberen radialen Abschnitts (22) verbunden sind,
wobei jede Schaufel (20) einen inneren Rahmen umfasst, umfassend einen vertikalen Rahmenabschnitt (123) und:
- ein unteres radiales Flügelprofil (221), das am unteren radialen Abschnitt (21) der Schaufel angeordnet ist,
- ein einziges vertikales Flügelprofil (223), das am vertikalen Abschnitt (23) der Schaufel angeordnet ist, und
- ein oberes radiales Flügelprofil (222), das am oberen radialen Abschnitt (22) der Schaufel angeordnet ist,
wobei das vertikale Flügelprofil (223) jeder Schaufel (20) in seiner Gesamtheit um eine zugehörige Drehachse drehbar ist, die durch den jeweiligen vertikalen Rahmenabschnitt (123) definiert ist, und zwar unabhängig von den entsprechenden vertikalen Flügelprofilen (223) der anderen Schaufeln (20), um den Anstellwinkel des zugehörigen vertikalen Flügelprofils (223) einzustellen.

2. Windturbine nach Anspruch 1, wobei der untere radiale Abschnitt (21) ein erster unterer radialer Abschnitt (21) ist, wobei jede Schaufel (20) ferner einen zweiten unteren radialen Abschnitt (21') umfasst, der mit einem zugehörigen Flügelprofil (221') oder mit einem Zugelement versehen ist und ein radial inneres Ende (21a') aufweist, das mit der Nabe (3) verbunden ist, sowie ein radial äußeres Ende (21b'), das mit dem zugehörigen vertikalen Abschnitt (23) verbunden ist, wobei der zweite untere radiale Abschnitt (21') auf einer anderen Höhe als der erste untere radiale Abschnitt (21) angeordnet und gegenüber dem ersten unteren radialen Abschnitt (21) derart abgewinkelt ist, dass eine dreieckige oder viereckige Struktur gebildet wird, die die Nabe (3) starr mit dem zugehörigen vertikalen Abschnitt (23) oder mit einem unteren Eckabschnitt (24) der Schaufel verbindet, der zwischen den unteren radialen Abschnitten (21, 21') und dem zugehörigen vertikalen Abschnitt (23) angeordnet ist, wobei der vertikale Abstand (d) zwischen den radial äußeren Enden (21b, 21b') der unteren radialen Abschnitte (21, 21') kleiner ist als der vertikale Abstand (D) zwischen den radial inneren Enden (21a, 21a') der unteren radialen Abschnitte (21, 21').

3. Windturbine nach Anspruch 1 oder 2, wobei mindestens ein Abschnitt von mindestens einem von dem unteren radialen Flügelprofil (221) und dem oberen radialen Flügelprofil (222) jeder Schaufel (20) um eine zugehörige Drehachse drehbar ist, gegebenenfalls unabhängig von den entsprechenden Abschnitten des unteren radialen Flügelprofils (221) oder des oberen radialen Flügelprofils (222) der anderen Schaufeln (20), um den Anstellwinkel oder die Krümmung des zugehörigen unteren radialen Flügelprofils (221) oder des zugehörigen oberen radialen Flügelprofils (222) einzustellen.

4. Windturbine nach einem der vorhergehenden Ansprüche, wobei der untere radiale Abschnitt (21), der vertikale Abschnitt (23) und der obere radiale Abschnitt (22) jeder Schaufel linear sind, wobei ein unterer Eckabschnitt (24) der Schaufel zwischen dem unteren radialen Abschnitt (21) und dem vertikalen Abschnitt (23) jeder Schaufel angeordnet ist, wobei ein oberer Eckabschnitt (25) der Schaufel zwischen dem oberen radialen Abschnitt (22) und dem vertikalen Abschnitt (23) jeder Schaufel angeordnet ist, wobei der untere Eckabschnitt (24) und der obere Eckabschnitt (25) gekrümmt sind.

5. Windturbine nach Anspruch 4, wobei jede Schaufel ferner ein unteres Eckflügelprofil (224) und ein oberes Eckflügelprofil (225) umfasst, die jeweils am unteren Eckabschnitt (24) und am oberen Eckabschnitt (25) der Schaufel angeordnet sind.

6. Windturbine nach einem der Ansprüche 4 bis 5, ferner umfassend eine Vielzahl von Zugelementen (70), die zwischen zugehörigen Eckabschnitten (24, 25) verschiedener Schaufeln oder zwischen mindestens einem der Eckabschnitte (24, 25) jeder Schaufel und mindestens einem von der Nabe (3) und dem Verbindungselement (30) oder zwischen der Nabe (3) und dem Verbindungselement (30) gespannt sind, um die Windturbine zu versteifen.

7. Windturbine nach Anspruch 4, wobei die radial äußeren Enden des unteren radialen Abschnitts (21) und des oberen radialen Abschnitts (22) jeder Schaufel durch jeweilige Gelenke (24a, 25a), die am zugehörigen unteren Eckabschnitt (24) und am zugehörigen oberen Eckabschnitt (25) angeordnet sind, mit dem zugehörigen vertikalen Abschnitt (23) verbunden sind, und wobei die radial inneren Enden des unteren radialen Abschnitts (21) und des oberen radialen Abschnitts (22) jeder Schaufel jeweils gelenkig mit der Nabe (3) und dem Verbindungselement (30) verbunden sind.

8. Windturbine nach einem der vorhergehenden Ansprüche, ferner umfassend einen Steuermechanismus (50), der jedem der vertikalen Flügelprofile (223) der Schaufeln zugeordnet und betätigbar ist, um die Anstellwinkel der vertikalen Flügelprofile (223) unabhängig voneinander durch Drehung des vertikalen Flügelprofils (223) jeder Schaufel (20) einzustellen.

9. Windturbine nach Anspruch 3, gegebenenfalls in Kombination mit einem der Ansprüche 4 bis 8, ferner umfassend einen Steuermechanismus (60), der jedem der oberen radialen Flügelprofile (222) oder unteren radialen Flügelprofile (221) der Schaufeln zugeordnet und in dem Verbindungselement (30) oder in der Nabe (3) angeordnet ist, wobei der Steuermechanismus (60) betätigbar ist, um die Anstellwinkel oder die Krümmungen der oberen radialen Flügelprofile (222) oder der unteren radialen Flügelprofile (221) unabhängig voneinander durch Drehung des mindestens einen Abschnitts von mindestens einem von dem unteren radialen Flügelprofil (221) und dem oberen radialen Flügelprofil (222) jeder Schaufel (20) einzustellen.

10. Windturbine nach Anspruch 3, gegebenenfalls in Kombination mit einem der Ansprüche 4 bis 9, ferner umfassend einen Steuermechanismus (40), der den unteren radialen Flügelprofilen (221) oder den oberen radialen Flügelprofilen (222) der Schaufeln zugeordnet und in der Nabe (3) oder in dem Verbindungselement (30) angeordnet ist, wobei der Steuermechanismus (40) betätigbar ist, um gleichzeitig die Anstellwinkel oder die Krümmungen der unteren radialen Flügelprofile (221) oder der oberen radialen Flügelprofile (222) durch Drehung des mindestens einen Abschnitts von mindestens einem von dem unteren radialen Flügelprofil (221) und dem oberen radialen Flügelprofil (222) jeder Schaufel (20) einzustellen.

## Revendications

1. Éolienne à axe vertical sans arbre, comprenant un moyeu (3) et une pluralité de pales en forme de C (20), lesdites pales étant, à une extrémité (21a), reliées au moyeu (3), et étant, à l'autre extrémité (22a), reliées les unes aux autres par un élément de liaison (30),
dans laquelle chaque pale (20) comprend :
- une portion radiale inférieure (21) ayant une extrémité radialement intérieure (21a) reliée au moyeu (3),
- une portion radiale supérieure (22) ayant une extrémité radialement intérieure (22a) reliée à l'élément de liaison (30), et
- une portion verticale (23) ayant des extrémités opposées reliées respectivement à une extrémité radialement extérieure (21b) de la portion radiale inférieure (21) et à une extrémité radialement extérieure (22b) de la portion radiale supérieure (22),
dans laquelle chaque pale (20) comprend
- un cadre intérieur comprenant une portion de cadre verticale (123) et
- un profil aérodynamique radial inférieur (221) agencé au niveau de la portion radiale inférieure (21) de la pale,
- un unique profil aérodynamique vertical (223) agencé au niveau de la portion verticale (23) de la pale, et
- - un profil aérodynamique radial supérieur (222) agencé au niveau de la portion radiale supérieure (22) de la pale,
dans laquelle le profil aérodynamique vertical (223) de chaque pale (20) est rotatif dans son intégralité autour d'un axe de rotation correspondant défini par la portion de cadre verticale respective (123), d'une manière indépendante des profils aérodynamiques verticaux homologues (223) des autres pales (20), afin de régler l'angle d'attaque du profil aérodynamique vertical correspondant (223).

2. Éolienne selon la revendication 1, dans laquelle ladite portion radiale inférieure (21) est une première portion radiale inférieure (21), dans laquelle chaque pale (20) comprend en outre une seconde portion radiale inférieure (21') pourvue d'un profil aérodynamique correspondant (221') ou d'un élément de traction et ayant une extrémité radialement intérieure (21a') reliée au moyeu (3) et une extrémité radialement extérieure (21b') reliée à la portion verticale correspondante (23), la seconde portion radiale inférieure (21') étant agencée à une élévation différente de celle de la première portion radiale inférieure (21) et étant inclinée par rapport à la première portion radiale inférieure (21) de manière à former une structure triangulaire ou quadrilatérale qui relie rigidement le moyeu (3) à la portion verticale correspondante (23), ou à une portion d'angle inférieure (24) de la pale interposée entre les portions radiales inférieures (21, 21') et la portion verticale correspondante (23), dans laquelle la distance verticale (d) entre les extrémités radialement extérieures (21b, 21b') des portions radiales inférieures (21, 21') est inférieure à la distance verticale (D) entre les extrémités radialement intérieures (21a, 21a') des portions radiales inférieures (21, 21').

3. Éolienne selon la revendication 1 ou 2, dans laquelle au moins une portion d'au moins l'un dudit profil aérodynamique radial inférieur (221) et dudit profil aérodynamique radial supérieur (222) de chaque pale (20) est rotative autour d'un axe de rotation correspondant, éventuellement d'une manière indépendante des portions homologues du profil aérodynamique radial inférieur (221) ou du profil aérodynamique radial supérieur (222) des autres pales (20), afin de régler l'angle d'attaque ou la courbure du profil aérodynamique radial inférieur correspondant (221) ou du profil aérodynamique radial supérieur correspondant (222).

4. Éolienne selon l'une quelconque des revendications précédentes, dans laquelle la portion radiale inférieure (21), la portion verticale (23) et la portion radiale supérieure (22) de chaque pale sont linéaires, dans laquelle une portion d'angle inférieure (24) de la pale est interposée entre la portion radiale inférieure (21) et la portion verticale (23) de chaque pale, dans laquelle une portion d'angle supérieure (25) de la pale est interposée entre la portion radiale supérieure (22) et la portion verticale (23) de chaque pale, ladite portion d'angle inférieure (24) et ladite portion d'angle supérieure (25) étant courbes.

5. Éolienne selon la revendication 4, dans laquelle chaque pale comprend en outre un profil aérodynamique d'angle inférieur (224) et un profil aérodynamique d'angle supérieur (225) agencés respectivement au niveau de la portion d'angle inférieure (24) et de la portion d'angle supérieure (25) de la pale.

6. Éolienne selon l'une quelconque des revendications 4 à 5, comprenant en outre une pluralité d'éléments de traction (70) tendus entre des portions d'angle correspondantes (24, 25) de différentes pales ou entre au moins l'une des portions d'angle (24, 25) de chaque pale et au moins l'un dudit moyeu (3) et dudit élément de liaison (30) ou entre le moyeu (3) et l'élément de liaison (30), afin de rigidifier l'éolienne.

7. Éolienne selon la revendication 4, dans laquelle les extrémités radialement extérieures de la portion radiale inférieure (21) et de la portion radiale supérieure (22) de chaque pale sont reliées à la portion verticale correspondante (23) par des charnières respectives (24a, 25a) agencées au niveau de la portion d'angle inférieure correspondante (24) et de la portion d'angle supérieure correspondante (25), et dans laquelle les extrémités radialement intérieures de la portion radiale inférieure (21) et de la portion radiale supérieure (22) de chaque pale sont articulées respectivement au moyeu (3) et à l'élément de liaison (30).

8. Éolienne selon l'une quelconque des revendications précédentes, comprenant en outre un mécanisme de commande (50) associé à chacun des profils aérodynamiques verticaux (223) des pales, et pouvant être actionné pour régler les angles d'attaque des profils aérodynamiques verticaux (223) d'une manière indépendante les uns des autres, par rotation dudit profil aérodynamique vertical (223) de chaque pale (20).

9. Éolienne selon la revendication 3, éventuellement en combinaison avec l'une quelconque des revendications 4 à 8, comprenant en outre un mécanisme de commande (60) associé à chacun des profils aérodynamiques radiaux supérieurs (222) ou des profils aérodynamiques radiaux inférieurs (221) des pales et agencé dans l'élément de liaison (30) ou dans le moyeu (3), ledit mécanisme de commande (60) pouvant être actionné pour régler les angles d'attaque ou les courbures des profils aérodynamiques radiaux supérieurs (222) ou des profils aérodynamiques radiaux inférieurs (221) d'une manière indépendante les uns des autres, par rotation de ladite au moins une portion d'au moins l'un dudit profil aérodynamique radial inférieur (221) et dudit profil aérodynamique radial supérieur (222) de chaque pale (20).

10. Éolienne selon la revendication 3, éventuellement en combinaison avec l'une quelconque des revendications 4 à 9, comprenant en outre un mécanisme de commande (40) associé aux profils aérodynamiques radiaux inférieurs (221) ou aux profils aérodynamiques radiaux supérieurs (222) des pales et agencé dans le moyeu (3) ou dans l'élément de liaison (30), ledit mécanisme de commande (40) pouvant être actionné pour régler de manière simultanée les angles d'attaque ou les courbures des profils aérodynamiques radiaux inférieurs (221) ou des profils aérodynamiques radiaux supérieurs (222), par rotation de ladite au moins une portion d'au moins l'un dudit profil aérodynamique radial inférieur (221) et dudit profil aérodynamique radial supérieur (222) de chaque pale (20).
